# EUROPEAN PATENT APPLICATION

(11) **EP 4 769 926 A1**
(43) Date of publication of application: **01.07.2026**
(21) Application number: 24856121.9
(22) Date of filing: 19.06.2024
(51) Int. Cl.: H02M 7/48

(54) **POWER CONVERSION DEVICE AND POWER CONVERSION METHOD**

(30) Priority: 23.08.2023 JP 2023135762
(71) Applicant: Hitachi Industrial Equipment Systems Co., Ltd., Tokyo 101-0021 (JP)
(72) Inventor: SATO, Fumihiro, Tokyo 101-0021 (JP); TAKEDA, Tsuyoshi, Tokyo 101-0021 (JP); MASUI, Tetsuya, Narashino-shi, Chiba 275-0001 (JP); BABA, Tomoyuki, Tokyo 101-0021 (JP)
(74) Representative: MERH-IP Matias Erny Reichl Hoffmann Patentanwälte PartG mbB
(86) International application number: PCT/JP2024/022314
(87) International publication number: WO 2025/041426

(57) **Abstract**

The power conversion device 100 includes: an inverter unit 4 that converts a DC voltage into an AC voltage; a control unit 7 that controls trial operation of the inverter unit 4 based on predetermined operation conditions; and a damage amount processing unit 9 that calculates and accumulates a damage amount of the inverter unit 4 during the trial operation period of the inverter unit 4 by the control unit, and obtains operation results of the inverter unit 4 based on the accumulated damage amount.

## Description

### TECHNICAL FIELD

The present invention relates to a power conversion device, and more particularly to a power conversion device and a power conversion method for supplying AC power to a motor.

### BACKGROUND ART

A power conversion device represented by a general-purpose inverter is widely used in the industrial field as a motor drive device for manufacturing equipment, lifting equipment, conveying equipment, and the like. In such various applications, stable operation of a general-purpose inverter is required. If the general-purpose inverter stops, the production or operation of the equipment may be halted, which could have a serious impact on production.

The general-purpose inverter controls the conduction and interruption of current by means of semiconductor elements such as an IGBT (Insulated Gate Bipolar Transistor) and diodes (hereinafter collectively referred to as "power semiconductors") to perform desired power conversion. The power semiconductors are joined to a copper foil pattern formed on an insulated substrate, for example, by wire bonding or soldering, thereby being electrically connected to an external circuit of the power semiconductors.

The insulated substrate is mounted on a metal base, and the power semiconductors are cooled via the metal base. A component in which the power semiconductors are housed within a housing provided with such an electrical connection structure with an external circuit and a cooling structure is referred to as a power module.

When current flows through or is interrupted in the power semiconductor, the semiconductor generates heat, and a temperature difference (hereinafter referred to as "ΔT") occurs between the junction and the fin (a metal base provided with a cooling structure). When the inverter is stopped, heat generation ceases and ΔT decreases.

At the junction of the above-mentioned power semiconductor (the junction with wire bonding or with the copper foil pattern), materials having different coefficients of thermal expansion are generally used. Therefore, thermal stress is applied to the junction due to fluctuations in ΔT. When the fluctuations in ΔT are repeated, delamination or cracking occurs at the junction, eventually leading to failure.

The time until such failure occurs varies depending on the magnitude and frequency of ΔT. The magnitude and frequency of ΔT differ depending on the manner in which the power conversion device is used and on the apparatus driven by the power conversion device.

In addition, depending on operating conditions, the load ratios applied to the IGBT and diode differ. Therefore, in order to prevent such failures, it is necessary to take measures to grasp the degree of load applied to the IGBT and diode according to the operating conditions of the power conversion device.

As prior art in this technical field, Patent Literature 1 discloses a power conversion device for driving a motor, wherein the amplitude of temperature change of the power semiconductor is calculated from the current flowing through the power semiconductor, the operating frequency, and the carrier frequency. Based on power cycle curve data and the temperature change amplitude, the thermal stress is calculated, and the remaining lifetime of the power semiconductor is estimated based on the thermal stress signal and output to a display unit.

Further, Patent Literature 1 discloses a technique in which, when the accumulated thermal stress reaches a predetermined threshold or when the remaining lifetime per unit time is calculated and compared with the expected lifetime, and if the remaining lifetime is shorter than the expected lifetime due to load fluctuations or the like, an alarm signal is output to the display unit, or an operation is performed to extend the life of the power semiconductor, such as lowering the current limit level or reducing the upper limit value of the carrier frequency.

### CITATION LIST

### PATENT DOCUMENT

Patent Literature 1: International Publication No. WO 2004/082114

### SUMMARY OF THE INVENTION

### PROBLEMS TO BE SOLVED BY THE INVENTION

In the configuration disclosed in Patent Literature 1, by displaying the remaining lifetime of the power semiconductor and an alarm signal on an operation panel, it is possible to take measures such as performing a life-extending operation through automatic adjustment of operating conditions before the system abnormally stops, or allowing an operator to replace the power conversion device.

However, in the configuration disclosed in Patent Literature 1, there is a concern that the lifetime diagnosis may only output an alarm signal when the damage of the power semiconductor reaches a predetermined threshold value, and that the alarm signal may be output immediately before the destruction of the power semiconductor.

Furthermore, in the configuration disclosed in Patent Literature 1, an operation for automatically adjusting the current value or carrier frequency based on the alarm signal is described. However, it does not take into account the effect on the entire system due to changes in operating conditions after the equipment starts operation. Therefore, there is a concern that it is unclear what kind of influence the automatic adjustment of parameters may have on the overall system.

Accordingly, the present invention has been made in view of the above problems, and it is an object of the present invention to provide a power conversion device and a power conversion method that can realize a short-term lifetime diagnosis of a power semiconductor in order to effectively utilize the power semiconductor within its proper lifetime.

### SOLUTIONS TO PROBLEMS

According to one aspect of the present invention that solves the above problem, there is provided a power conversion device comprising: an inverter unit that converts a DC voltage into an AC voltage; a control unit that controls operation of the inverter unit based on predetermined operating conditions; and a damage amount processing unit that, during an operation period of the inverter unit controlled by the control unit, calculates a damage amount of the inverter unit and generates data indicating operation results based on the calculated damage amount and the operating conditions.

According to another aspect of the present invention, there is provided a power conversion method for a power conversion device in which a DC voltage is converted into an AC voltage by an inverter unit, operation of the inverter unit is controlled by a control unit based on predetermined operating conditions, and a damage amount processing unit calculates a damage amount of the inverter unit during the operation of the inverter unit controlled by the control unit. An operation period during which the inverter unit is expected to operate normally is set in advance. In the damage amount calculation unit, the damage amount of the inverter unit is measured during the operation period of the inverter unit controlled by the control unit, and a predicted breakage time of the inverter unit is calculated based on the measured damage amount and the operating conditions. Data indicating operation results is generated based on the calculated predicted breakage time, the preset operation period, and the operating conditions.

### EFFECTS OF THE INVENTION

According to the present invention, it is possible to provide a power conversion device and a power conversion method capable of realizing a short-term lifetime diagnosis of a power semiconductor in order to effectively utilize the power semiconductor within its proper lifetime.

### BRIEF DESCRIPTION OF THE DRAWINGS

Fig. 1 is a circuit diagram showing an example configuration of a power conversion device according to Embodiment 1 of the present invention.
Fig. 2 is a flowchart illustrating an example of processing in a damage amount processing unit according to Embodiment 1 of the present invention.
Fig. 3 is an explanatory diagram showing an example waveform of operating conditions according to Embodiment 1 of the present invention.
Fig. 4 is an explanatory diagram showing an example display of trial operation results according to Embodiment 1 of the present invention.
Fig. 5 is a circuit diagram showing a modified example of the power conversion device according to Embodiment 1 of the present invention.
Fig. 6 is a circuit diagram showing an example configuration of a power conversion device according to Embodiments 2 and 3 of the present invention.
Fig. 7 is an explanatory diagram showing an example display of trial operation results according to Embodiment 2 of the present invention.
Fig. 8 is a flowchart illustrating an example of processing in a damage amount processing unit and a damage amount estimation unit according to Embodiment 2 of the present invention.
Fig. 9 is an explanatory diagram showing an example display of operation results according to Embodiment 3 of the present invention.

### MODE FOR CARRYING OUT THE INVENTION

Hereinafter, embodiments of the present invention will be described in detail with reference to the drawings.

### [Embodiment]

### <Embodiment 1>

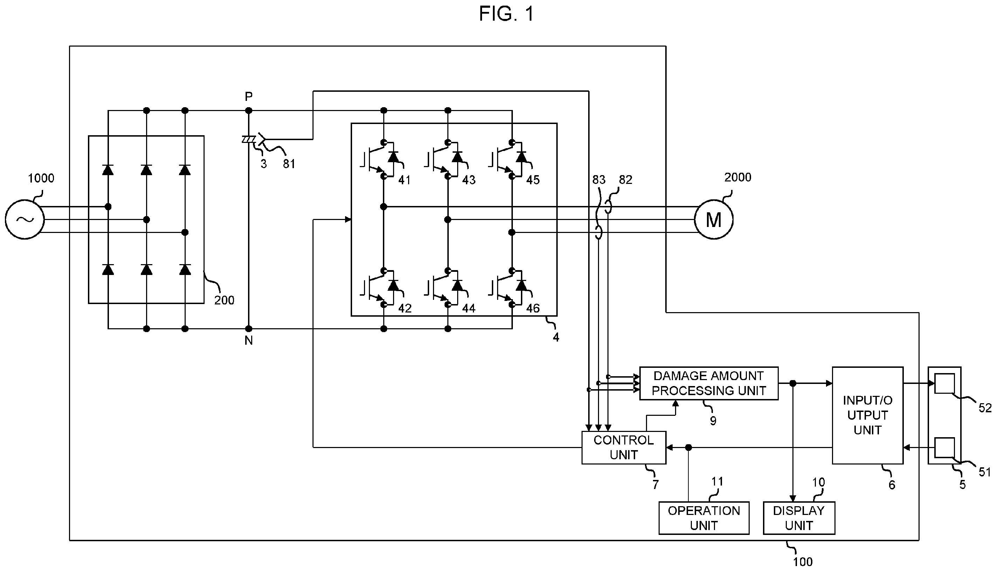

First, Embodiment 1 of the present invention will be described with reference to Fig. 1. Fig. 1 is a circuit diagram showing an example configuration of a power conversion device according to Embodiment 1 of the present invention. As shown in Fig. 1, a power conversion device 100 is connected to an AC power supply 1000 and a motor 2000, and is also connected to an external device 5 via an input/output unit 6.

As shown in Fig. 1, the power conversion device 100 includes: a rectifier unit 200 that receives an AC voltage from the AC power supply 1000 and outputs a DC voltage; a smoothing capacitor 3 that smooths the DC voltage; an inverter unit 4 that converts the DC voltage into AC power; an input/output unit 6 that inputs and outputs signals to and from the external device 5; a control unit 7 that outputs a drive signal to the inverter unit 4; a voltage detection unit 81 that detects the DC voltage; current detection units 82 and 83 that detect output currents of the inverter unit 4; a damage amount processing unit 9 that calculates a damage amount (an index of deterioration degree or breakage degree) of a power semiconductor in the inverter unit 4 using the DC voltage and the output current; a display unit 10 that displays information, for example, on a liquid crystal display (LCD); and an operation unit 11 provided with, for example, operation buttons for receiving operation inputs from an operator.

The rectifier unit 200 is composed of a plurality of diodes and converts an AC voltage input from the AC power supply 1000 into a DC voltage, which is output to both electrodes of the smoothing capacitor 3. By the rectifying action of the diodes in the rectifier unit 200, a DC voltage is generated in which a positive voltage is applied to the DC voltage wiring on the node P side and a negative voltage is applied to the DC voltage wiring on the node N side.

9701
The smoothing capacitor 3 is connected to the DC voltage wiring at nodes P and N and smooths the DC voltage. Although Fig. 1 illustrates, as a representative example, a system that performs full-wave rectification of a three-phase AC voltage, it may alternatively be configured as a system that performs full-wave rectification of a single-phase AC voltage or a system that performs voltage doubling rectification of a single-phase AC voltage.

The inverter unit 4 is composed, for example, of six power semiconductors 41 to 46. When the motor 2000 performs motoring operation, the power semiconductors 41 to 46 operate to convert the DC voltage of the smoothing capacitor 3 into AC power and output it to the motor 2000. When the motor 2000 performs regenerative operation, the power semiconductors 41 to 46 operate so as to charge the smoothing capacitor 3 with the regenerative energy from the motor 2000.

Here, when the DC voltage falls below a reference voltage, it is determined to be a motoring operation, and when the DC voltage exceeds the reference voltage, it is determined to be a regenerative operation. Alternatively, the control unit 7 may estimate the motor power factor based on control information it possesses, and determine whether the operation is motoring or regenerative based on the estimated result.

The power semiconductors shown in Fig. 1 are represented by circuit symbols of IGBTs as an example; however, other types of power semiconductors such as MOSFETs (Metal Oxide Semiconductor Field Effect Transistors) may also be applied.

The external device 5 includes an output unit 51 that outputs signals to the power conversion device 100, and an input unit 52 that receives signals from the power conversion device 100. In Embodiment 1, the input unit 52 may be, for example, a liquid crystal panel that obtains input information by touch on a display screen. However, it is not limited thereto and may alternatively be an input/output device composed of a display panel and a keyboard. Note that the liquid crystal panel and the input/output device are omitted from illustration.

Here, as an example, a case is described in which the external device 5 is a device (such as a computer, smartphone, or operator terminal) provided with a function for operating the power conversion device 100 by means of a liquid crystal panel or various buttons.

When predetermined operating conditions (setting parameters necessary for inverter operation) of the power conversion device 100 are input to the external device 5 by an operator's operation, the power conversion device 100 receives a signal (such as the operating conditions) from the output unit 51 and operates under those operating conditions. Various parameters, such as current values and voltage values generated thereby, are output from the power conversion device 100 to the input unit 52 of the external device 5. Examples of the predetermined operating conditions include carrier frequency (Hz), boost amount (%), current limit, and acceleration/deceleration time (seconds).

As another example, a case is described in which the external device 5 is a device connected via a fieldbus such as a PLC (Programmable Logic Controller). In this case, operating conditions of the power conversion device 100 are input based on commands from an upper layer of the fieldbus, and the power conversion device 100 receives a signal from the output unit 51 and operates under the corresponding operating conditions. Various parameters such as current values and voltage values generated thereby are output from the power conversion device 100 to the input unit 52 of the external device 5 as analog signals.

The display unit 10 is composed of, for example, a seven-segment LED that displays internal data such as various parameters and frequency setting values, and an operation lamp that lights up while the inverter is operating. The operation unit 11 is composed of a RUN key that is pressed when operating the inverter, a STOP key that is pressed when decelerating or stopping the inverter, and a JOG dial, for example.

Regarding basic signal exchange, the display unit 10 and the external device 5, as well as the operation unit 11 and the external device 5, correspond to each other as described above. However, the display unit 10 and the operation unit 11 differ from the output unit 51 and the input unit 52 of the external device 5 in that the display unit 10 and the operation unit 11 are disposed within the power conversion device 100.

The voltage detection unit 81 detects the DC voltage of the smoothing capacitor 3. Since the system voltage can reach a high voltage of several hundred volts, in general, the voltage detection unit 81 uses a signal obtained by dividing the DC voltage with resistors and converting it into a voltage of several volts. The current detection units 82 and 83 each detect the current of at least two phases of the three-phase output of the inverter unit 4 by means of current sensors such as shunt resistors or current transformers.

This is because, when the leakage current to ground is ignored, the sum of the three-phase AC currents becomes 0 A. Accordingly, by calculating the remaining one-phase current from the measurement results of any two phases of the three-phase AC current, it is possible to effectively detect the current values of all three phases.

The control unit 7 outputs a drive signal to the inverter unit 4 based on predetermined operating conditions received from the external device 5 via the operation unit 11 or the input/output unit 6, in accordance with commands from an operator or from an upper layer of a fieldbus. The control unit 7 performs feedback control by using the predetermined operating conditions input from the external device 5 as command values, and using the detected values from various detection units such as the voltage detection unit 81 and the current detection units 82 and 83 as control variables, thereby controlling the motor 2000 to achieve a desired operation (test operation state).

Specifically, the control unit 7 calculates a gate signal based on the current values detected by the current detection units 82 and 83, the speed command, and the set carrier frequency. The calculated gate signal is amplified by a gate driver (not shown) and input as a gate voltage to an IGBT (not shown). The ratio of the gate-on period to the carrier period is referred to as the on-duty ratio.

As a result, a voltage is output such that the motor 2000 attains the commanded speed. Due to Joule loss when the inverter unit 4 is on, switching loss during current conduction and interruption, and recovery loss, the junction temperature rises, and when the inverter unit 4 is off, the junction temperature decreases.

In the inverter unit 4, since the power semiconductors 41 to 46 are joined using materials having different coefficients of thermal expansion, stress is applied to the junctions when the temperature of the power semiconductors 41 to 46 rises and falls. The endurance against this stress is referred to as power cycle endurance, which is expressed by the number of allowable repetitions for a given temperature amplitude, called the lifecycle.

Accordingly, if the temperature history of the power semiconductors 41 to 46 is known, it is possible to estimate their lifetime. Here, the term lifetime refers to a predicted time period from the start of use of the power semiconductors 41 to 46 after the installation of the equipment until their breakage occurs (hereinafter referred to as the predicted breakage time). The damage amount processing unit 9 is configured by circuits such as a DSP, a memory, and a microcontroller, for example. Based on values respectively detected by the voltage detection unit 81 and the current detection units 82 and 83, as well as information such as the carrier frequency set as the predetermined operating condition and the duty value calculated for controlling the motor 2000, the damage amount processing unit 9 calculates the damage amount of the power semiconductors 41 to 46 in the inverter unit 4.

As an example of a method for calculating the damage amount, the rainflow method can be employed. The rainflow method is a technique for measuring amplitudes and frequencies in order to predict fatigue life from irregular repeated stress loads. By applying this method, it becomes possible to calculate the damage amount of the power semiconductors caused by junction temperature ripples.

The damage amount processing unit 9 is configured such that the damage amount generated in each calculation cycle is stored in a storage unit, thereby enabling the computation of both the damage amount calculated in each calculation cycle and the damage amount accumulated during the operating period of the power conversion device 100.

In this calculation of the damage amount, it is necessary to store the temperature history of the power semiconductors 41 to 46 and to detect the temperature peaks at which the damage, which is important for high-accuracy lifetime prediction, becomes maximum. This temperature history is stored in the memory within the damage amount processing unit 9. Output information such as the damage amount calculated by the damage amount processing unit 9 may be output to the input unit 52 via the input/output unit 6, or may be displayed on the display unit 10.

Next, with reference to Fig. 1, an example of a procedure for setting operating conditions during a trial operation before installation of equipment will be described. Here, in the present embodiment, the term trial operation refers to driving the inverter unit 4 to operate the motor 2000 before equipment installation, based on predetermined operating conditions, that is, operating conditions set by the operator.

First, an operator inputs, to the control unit 7 from the operation unit 11 or the output unit 51, the operating conditions preset for the trial operation and a trial operation signal for managing the start and end of the trial operation. As described above, these signals are based on commands from the liquid crystal operator, the fieldbus, or the operation unit 11, and are input to the power conversion device 100 via connectors such as control terminal blocks and operation buttons.

The control unit 7 outputs a drive signal to the inverter unit 4 based on the input operating conditions to perform the trial operation of the motor 2000. The voltage detection unit 81 and the current detection units 82 and 83 perform feedback control by outputting the detected voltage value and detected current values during the trial operation to the control unit 7.

During the trial operation, the damage amount processing unit 9 calculates the damage amount based on the voltage detection value from the voltage detection unit 81, the current detection values from the current detection units 82 and 83, and information such as the carrier frequency and duty value received from the control unit 7, and stores the calculated damage amount in a memory (not shown). The damage amount processing unit 9 outputs a part or all of the trial operation results including the damage amount to the external device 5 and the display unit 10. Details of these trial operation results will be described later.

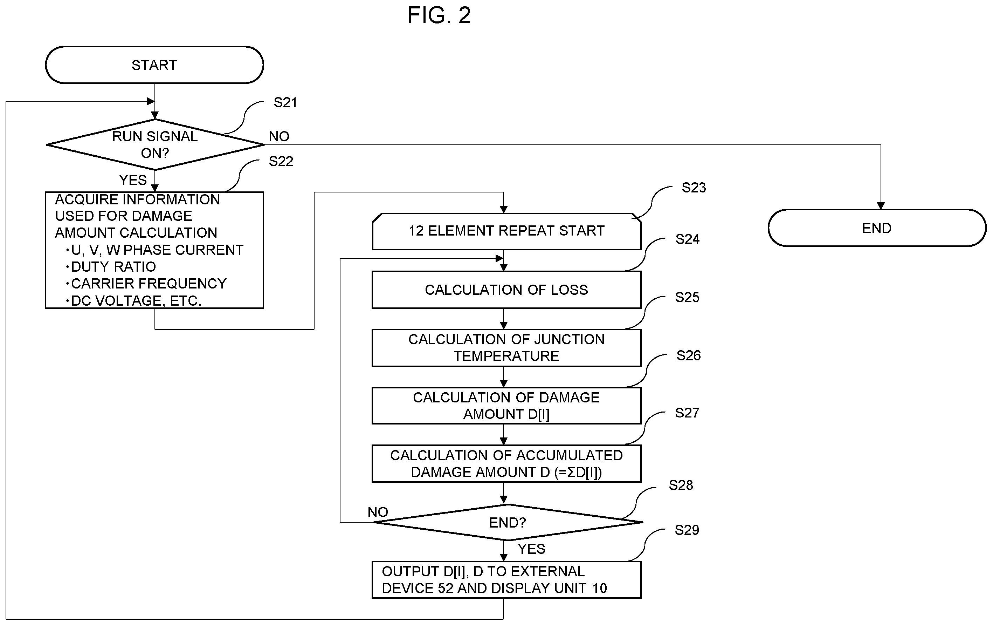

Next, the operation of the damage amount processing unit 9 during the trial operation will be described with reference to Fig. 2. Fig. 2 is a flowchart illustrating an example of processing in the damage amount processing unit in Embodiment 1 of the present invention. In Fig. 2, the RUN signal is set as a trigger for the trial operation. For example, when the RUN key on the operation unit 11 is pressed and the inverter unit 4 starts switching, the RUN signal turns ON (YES route of Step S21).

In Step S21, when the stop key of the operation unit 11 is pressed and switching of the inverter unit 4 is stopped, the RUN signal is turned OFF (NO route of Step S21).

When the RUN signal is turned ON at the start (START) of the trial operation (Step S21), the damage amount processing unit 9, as described above, acquires information necessary for calculating the damage amount from the voltage detection unit 81, the current detection units 82 and 83, and the control unit 7 (Step S22). The detection targets here include U-, V-, and W-phase currents, duty ratio, carrier frequency, and DC voltage.

Thereafter, the damage amount processing unit 9 calculates the damage amount D[i] of each of the power semiconductor elements (a total of 12 elements consisting of IGBTs and diodes) included in the inverter unit 4, and the accumulated damage amount d (= ΣD[i]) accumulated in each element. At that time, processing for all 12 elements (the inverter unit 4 and the rectifier unit 200) is repeatedly executed according to the following sequence (Step S23).

The damage amount processing unit 9 first performs calculation of losses (Step S24), calculation of junction temperature (Step S25), calculation of the damage amount D[i] (Step S26), and then calculation of the accumulated damage amount d (= ΣD[i]) accumulated in each element (Step S27).

When the processing for all 12 elements has been executed (YES route of Step S28), the damage amount processing unit 9 outputs the damage amount D[i] and the accumulated damage amount d to the external device 5 and the display unit 10 (Step S29). The damage amount processing unit 9 repeatedly performs the above processing while the RUN signal is ON, and terminates the processing when the RUN signal turns OFF (NO route of Step S21).

In this way, the operator of the power conversion device 100 can obtain the instantaneous damage amount D[i] and the accumulated damage amount d during the trial operation period (the period in which the RUN signal is ON).

Although in Fig. 2 the signal synchronized with the switching of the inverter unit 4 was set as the trigger for the trial operation, the same effect can be obtained even if a different signal is used as the trigger. As one example, a signal may be input from the external device 5 as an ON signal during a period in which the damage amount is to be calculated, and this signal may be used in place of the RUN signal described in Fig. 2 and the like.

The external device 5 displays on a liquid crystal panel the information output to the input unit 52 from the input/output unit 6, or outputs to the input/output unit 6 from the output unit 51 the information directly input through operation on the display screen of the liquid crystal panel.

As described with reference to Fig. 2, the operator performs multiple trial operations in accordance with a plurality of different operating conditions preset by the operator, and determines, based on the results (trial operation results) of each trial operation displayed on the liquid crystal panel, the final operating condition suitable for operation after equipment installation. This is referred to as the appropriate operating condition.

Examples of the predetermined operating conditions, that is, parameters adjusted by the operator through the liquid crystal panel, include the carrier frequency (Hz), the boost amount at startup (%), the current limit in the 0 Hz range, and the acceleration/deceleration time. The following describes each of these parameters.

The carrier frequency is the frequency at which the power semiconductors of the inverter unit 4 are switched. In the case of IGBTs, it is generally set to several hundred hertz to several tens of kilohertz. By increasing the carrier frequency, it is possible to avoid the audible range and thereby reduce audible noise; however, since the switching losses increase, the damage amount also increases.

The current limit in the 0 Hz range is a parameter for adjusting the current value flowing until the magnetic flux inside the motor 2000 is established at startup during sensorless vector control. By increasing the current limit value in the 0 Hz range, that is, by increasing the current value in a low-speed range (for example, approximately 3 Hz or lower) referred to as the 0 Hz range, the magnetic flux inside the motor 2000 before or immediately after the start of rotation is increased. As one example, in an elevator, this makes it possible to suppress steady slipping after the brake is released.

However, since the main current is continuously switched in a low-frequency region, the junction temperature ripple increases. Accordingly, increasing the current limit value in the 0 Hz range accelerates an increase in the damage amount and leads to a reduction in the lifetime of the power semiconductors.

The boost amount at startup refers to an amount by which the current flowing through the motor 2000 at the start of rotation during sensorless vector control is temporarily added to the current limit value in the 0 Hz range. Unlike the current limit value in the 0 Hz range, the boost amount at startup increases the current only at startup and decays with a time constant within the 0 Hz range.

As one example, in the brake release operation of an elevator, if the brake is released before the magnetic flux inside the motor 2000 is established, slipping occurs. By adjusting the boost amount at startup, transient slipping immediately after brake release can be suppressed. However, as with the current limit in the 0 Hz range, increasing the current value of the motor 2000 in a low-frequency region results in a reduction in the lifetime of the power semiconductors.

The acceleration/deceleration time represents a combination of the time (acceleration time) required for the motor 2000 connected to the power conversion device 100 to increase its rotational speed from a stopped or low-speed rotating state to a desired rotational speed, and the time (deceleration time) required for the motor 2000 to decrease its rotational speed from a high-speed rotating state to a desired rotational speed.

As the acceleration/deceleration time becomes shorter, the acceleration torque and deceleration torque increase, resulting in an increase in the output current value of the inverter unit, while the duration of the low-frequency region in which the junction temperature ripple increases becomes shorter.

Thus, depending on the operating specifications of the motor 2000, the damage amount changes by adjusting the acceleration/deceleration time. When changing the acceleration/deceleration time for the purpose of reducing the damage amount, whether it is preferable to make it longer or shorter depends on the specifications of the load side of the motor 2000.

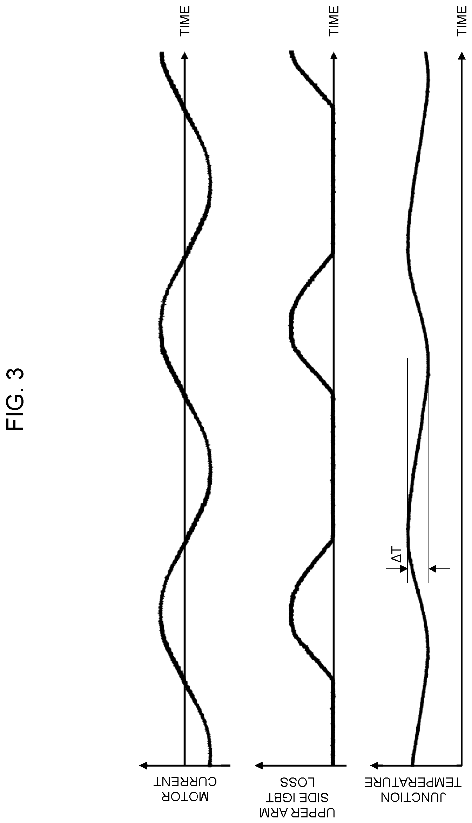

Next, with reference to Fig. 3, the respective waveforms of the operating conditions will be described. Fig. 3 is an explanatory diagram showing an example of the waveforms of the operating conditions in Embodiment 1 of the present invention. Fig. 3 illustrates an example of the current waveforms detected by the current detection units 82 and 83 when one phase of a three-phase bridge is extracted, as well as examples of the instantaneous loss and junction temperature of the upper-arm-side IGBT calculated by the damage amount processing unit 9.

In the current waveform of the motor 2000 shown in Fig. 3 (graph of motor current), the positive direction indicates the direction in which current flows out from the inverter unit 4 to the motor 2000, and the negative direction indicates the direction in which current flows in from the motor 2000 to the inverter unit 4.

Generally, since an IGBT is a device that does not conduct in the reverse direction, as shown in Fig. 3, losses occur in the upper-arm-side IGBT only when the current of the motor 2000 flows in the positive direction (graph of instantaneous loss of the upper-arm-side IGBT), and almost no loss occurs when the current of the motor 2000 flows in the negative direction. The junction temperature (graph of junction temperature) repeatedly rises and falls in accordance with the thermal impedance-time characteristics inside the IGBT.

Due to this junction temperature ripple, thermal stress is applied to the junction portion, and the damage accumulates. The lower the rotational speed of the motor 2000 and the greater the loss, the larger the junction temperature ripple ΔT becomes. Accordingly, the operator is required to appropriately set the operating conditions in view of the operation of the motor 2000 and the damage amount.

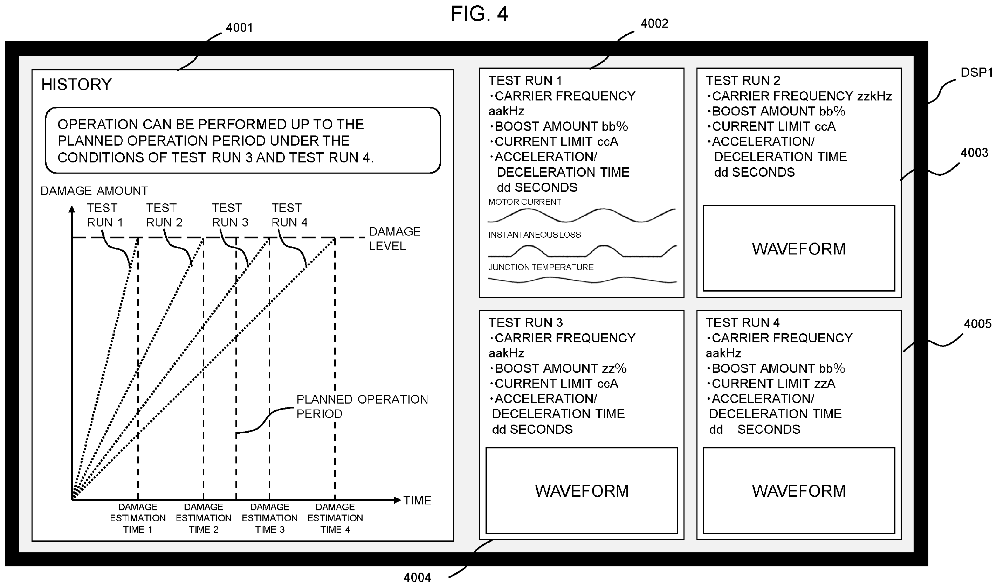

Next, with reference to Fig. 4, an example of an operation in Embodiment 1 will be described. Fig. 4 is an explanatory diagram showing an example of the display of trial operation results in Embodiment 1 of the present invention. In Fig. 4, an example of the trial operation results is represented as a display example on a display screen DSP1. The display screen DSP1 may be, for example, the input unit 52 of the external device 5 employing a liquid crystal panel, or the display unit 10 employing a liquid crystal panel.

The information on the display screen DSP1 includes history information 4001 indicating, for example, predicted breakage times obtained from multiple trial operations, and operation condition information 4002, 4003, 4004, and 4005, each corresponding to trial operations 1, 2, 3, and 4 and indicating, for example, different parameter settings. Hereinafter, the trial operation results include the history information 4001 and the operation condition information 4002 to 4005.

By visually confirming these trial operation results through the display screen DSP1, the operator can perform a lifetime diagnosis to obtain operating conditions that ensure an appropriate lifetime of the inverter unit 4, that is, the power semiconductors 41 to 46, and thereby avoid a situation where the power semiconductors need to be replaced before the planned operating period.

Here, the planned operating period refers to a period during which the power semiconductors 41 to 46 can operate normally without failure after equipment installation. In Embodiment 1, the history information 4001 visually presents to the operator any operating conditions estimated to cause breakage before the planned operating period, so that such operating conditions can be excluded from the candidates. Accordingly, it is evident that implementing a lifetime diagnosis that facilitates the selection of operating conditions resulting in an appropriate lifetime is important for the operator's judgment.

The history information 4001 is a graph in which the damage amount, which numerically represents the failure state of the power semiconductors, is plotted on the vertical axis, and the time indicating the breakage timing is plotted on the horizontal axis. The graph shows, for each of the trial operations 1, 2, 3, and 4, the predicted breakage times 1, 2, 3, and 4 corresponding to the predetermined breakage level (vertical axis) set in advance by the operator.

In the example shown in Fig. 4, the operating conditions of trial operations 1 and 2 reach the predicted breakage times before the planned operating period set in advance by the operator, indicating that excessive load is applied to the power semiconductors, leading to accelerated breakage. Therefore, in the case of Fig. 4, it is clear that the operating conditions of trial operations 3 and 4, which reach the breakage level after exceeding the planned operating period on the time axis, are suitable as the operating conditions after equipment installation.

When the operator wishes to view the motor current, instantaneous loss, and junction temperature for each operating condition, it is sufficient to tap the waveform display portion (touch panel) of the operating condition to be operated on the liquid crystal panel display of the external device 5 or the display unit 10. An example of this is shown in Fig. 3.

In this way, based on the trial operation results displayed on the liquid crystal panel of the external device 5, the operator can quantitatively grasp the relationships among the carrier frequency, the losses, the junction temperature ripple, and the damage amount, and can compare these with the specifications of the load side of the power conversion device 100 and the planned operating period to select one of the conditions from among those used during the trial operations.

In the power conversion device 100 described above, it becomes possible to quantitatively grasp the relationships among the operating conditions set during the trial operation, the losses of the power semiconductors arranged in the inverter unit 4, the junction temperature, the damage amount, and the planned operating period. As mentioned earlier, the three parameters-carrier frequency, 0 Hz-region current limit, and starting boost amount-each have a trade-off between the specifications on the load side of the power conversion device 100 and the damage amount of the inverter unit 4.

As described above, according to Embodiment 1, since it is possible to estimate the predicted breakage time that exceeds the planned operating period by using multiple different operating conditions during the trial operation stage before equipment installation, it becomes possible to operate the system under operating conditions that take into account the lifetime of the power semiconductors after equipment installation.

In particular, since the power semiconductors are actually operated and their lifetime is estimated from the progress of the accumulated damage amount during that time, it is not necessary to spend time until the power semiconductors actually fail in order to obtain the appropriate operating conditions. Thus, the appropriate operating conditions can be obtained in a short time while suppressing damage to the power semiconductors, thereby enabling realization of a lifetime diagnosis for effectively utilizing the power semiconductors within an appropriate lifetime.

Furthermore, when the trial operation is repeated several times as in Embodiment 1, the lifetime is determined based on the accumulated damage amount corresponding to the number of repetitions, thereby improving the accuracy of lifetime determination.

Moreover, since at the trial operation stage it is possible to use the lifetime-indicated by the damage amount and predicted breakage time of the power semiconductors-as one index, it becomes possible to set the operating conditions taking into account the damage amount of the inverter unit 4 in addition to the characteristics of the load side of the power conversion device 100. Accordingly, there is no need to set the operating conditions solely based on the load-side specifications, thereby improving the operability for the equipment operator.

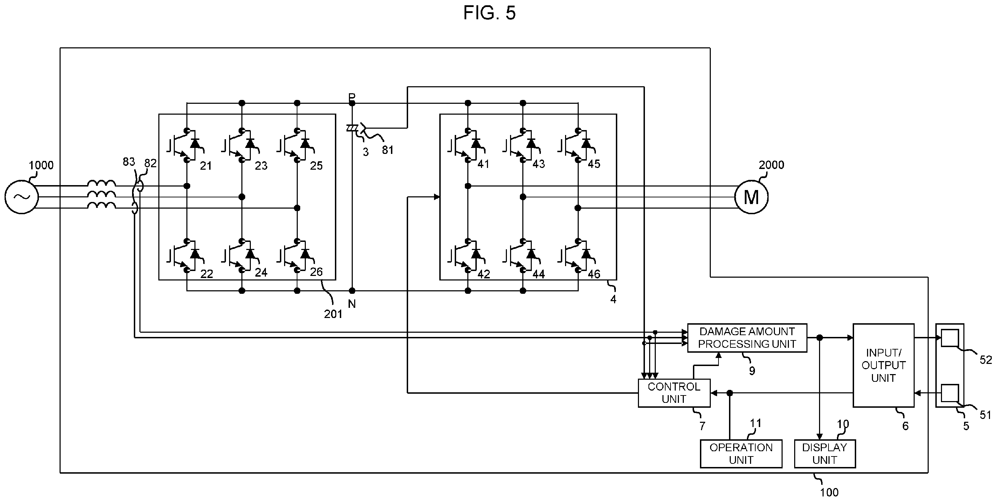

Next, a modified example of Embodiment 1 will be described with reference to Fig. 5. Fig. 5 is a circuit diagram showing a modified example of the power conversion device according to Embodiment 1 of the present invention. The method described in Embodiment 1 above is not limited to the inverter unit 4 shown in Fig. 1 but is also applicable to other circuit configurations. Description of units having the same reference numerals as those in Fig. 1 is omitted.

As shown in Fig. 5, the power conversion device 101 of this modified example includes, instead of the rectifier unit 200 shown in Fig. 1, a rectifier unit 201 composed of, for example, six power semiconductors 21 to 26 constituting a power regeneration converter. The voltage detection unit 81 and the current detection unit 82 are arranged on the AC power supply 1000 side of the rectifier unit 201.

When the motor 2000 in Fig. 1 performs a motoring operation, electric power is transmitted from the AC power supply 1000 to the motor 2000 through the rectifier unit 201, the smoothing capacitor 3, and the inverter unit 4. When the motor 2000 performs regenerative operation, regenerative power is transmitted from the inverter unit 4 to the AC power supply 1000 through the smoothing capacitor 3 and the rectifier unit 201. Accordingly, effects such as power factor improvement during power running and utilization of regenerative energy can be obtained.

In the power conversion device 101, the rectifier unit 201 performs motoring and regenerative operation by switching the power semiconductors 21 to 26, in the same manner as the inverter unit 4. The lifetime of the power semiconductors 21 to 26 is determined by the losses, junction temperature ripple, and damage amount caused by current conduction and interruption.

Although there are differences such as the absence of a 0 Hz region since the carrier frequency of the AC power supply 1000 is generally fixed, the loss reduction effect due to a decrease in carrier frequency can be obtained in the same manner as in the inverter unit 4. In this modified example, since the rectifier unit 201 serves as a power regeneration converter, the power regeneration converter itself operates in the same manner as the inverter unit 4.

Accordingly, the methods and display contents described throughout Embodiment 1 for the inverter unit 4, as well as those displayed on the liquid crystal panel and the display unit 10, can also be applied to the rectifier unit 201. That is, by the same procedure as in Embodiment 1, it becomes possible to estimate the loss amount and lifetime of the rectifier unit 201, thereby achieving the same effects.

### <Embodiment 2>

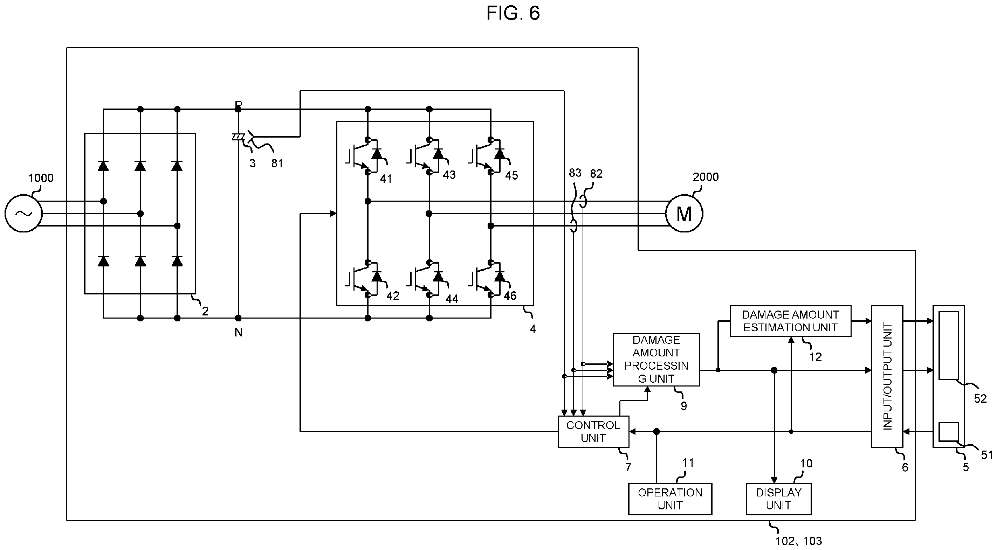

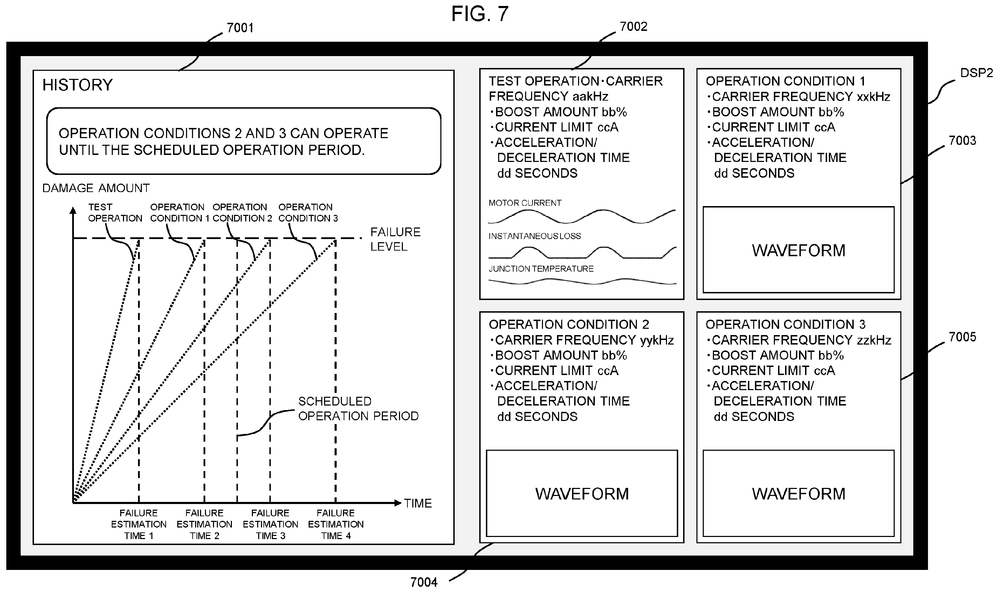

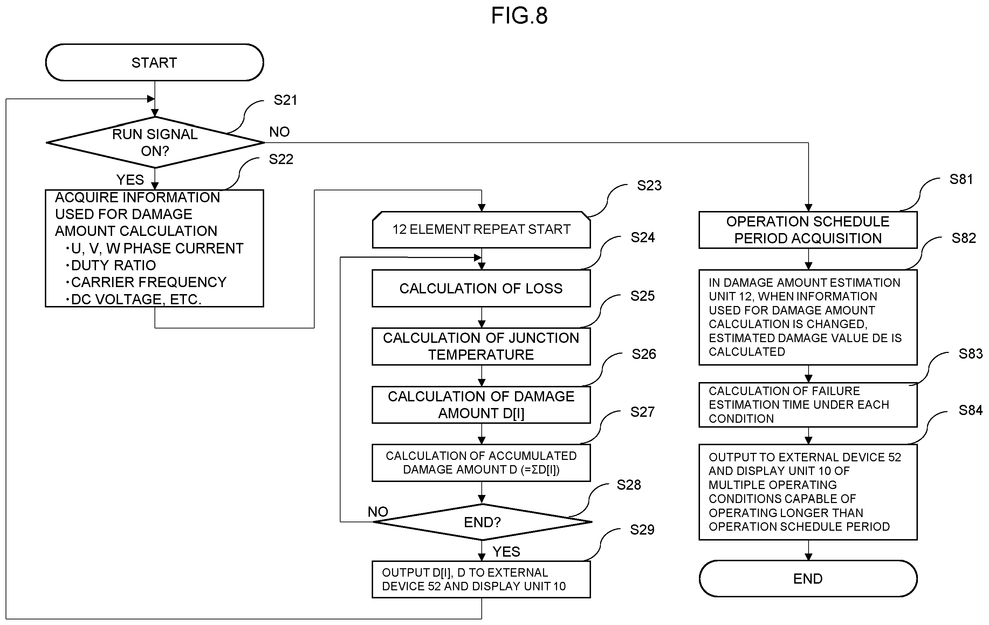

Next, Embodiment 2 of the present invention will be described with reference to Figs. 6, 7, and 8. Fig. 6 is a circuit diagram illustrating an example configuration of a power conversion device according to Embodiment 2 of the present invention; Fig. 7 is an explanatory diagram showing an example of a display of trial operation results according to Embodiment 2; and Fig. 8 is a flowchart illustrating an example of processing performed in the damage amount processing unit and the damage amount estimation unit according to Embodiment 2.

As shown in Fig. 6, the power conversion device 102 of Embodiment 2 has a configuration in which a damage amount estimation unit 12 is added to the power conversion device 100 shown in Fig. 1, and descriptions of units having the same reference numerals are omitted. The damage amount estimation unit 12 is connected to the damage amount processing unit 9 and the input/output unit 6.

The damage amount estimation unit 12 is composed of, for example, a circuit such as a DSP, a memory, or a microcontroller. It receives the damage amount during trial operation output by the damage amount processing unit 9, the operating conditions set during the trial operation, and the scheduled operating period. The damage amount estimation unit 12 has a function of changing, for example, the parameter of carrier frequency by a predetermined number of steps from the parameters set during the trial operation and calculating respective estimated failure times.

In this manner, the damage amount estimation unit 12 generates multiple operating conditions different from those used in the trial operation as candidates. For these generated candidate operating conditions, no actual trial operation is performed, and the damage amount, estimated failure time, and other information are all estimated by calculation based on the damage amount and other information actually obtained in the trial operation.

In this Embodiment 2, the carrier frequency is used as the parameter to be changed among the operating conditions; however, the present invention is not limited thereto, and other parameters may also be used. For example, when the carrier frequency is reduced, since switching loss is substantially proportional to the carrier frequency, the switching loss is reduced in proportion to the reduction rate of the carrier frequency.

Accordingly, the damage amount estimation unit 12 reduces only the switching loss component, while keeping the conduction loss component unchanged, among the loss calculation results in the damage amount processing unit 9, by the ratio of the carrier frequency, and calculates a reduced damage amount corresponding thereto. The damage amount estimation unit 12 outputs the trial operation result including the reduced damage amount to the input unit 52 of the external device 5. By configuring the power conversion device 102 in this manner, it becomes possible to reduce the number of trial operations that conventionally had to be performed multiple times.

In Fig. 7, an example of trial operation results is shown as a display screen DSP2. In the display screen DSP1 shown in Fig. 4 described in Embodiment 1 above, the relationship between the damage amount and time for each trial operation performed multiple times is shown. In the case of the display screen DSP2 shown in Fig. 7, history information 7001 showing estimated failures and the like under the operating conditions during the trial operation and under different operating conditions, operation condition information 7002 during the trial operation, and multiple different operation condition information 7003, 7004, and 7005 (candidate operating conditions) obtained by changing the parameters of the operation condition information 7002 are shown.

The relationship between the damage amount and time during the trial operation and the relationship between the damage amount and time for each operating condition calculated by the damage amount estimation unit 12 when the parameters set during the trial operation are updated are shown together with the parameters set for the trial operation and for each operating condition.

In the display screen DSP2, the operation condition information 7003, 7004, and 7005 corresponding respectively to the operating conditions 1, 2, and 3 are displayed together with the history information 7001 obtained from one trial operation. Further, in the history information 7001, the estimated failure results when operated under the operation condition information 7002 for the trial operation and the operation condition information 7003, 7004, and 7005 set by changing parameters are displayed. Here, the operation condition information 7003, 7004, and 7005 respectively indicate the operating conditions 1, 2, and 3.

Based on the information displayed in Fig. 7, the operator compares the scheduled operating period with the estimated failure time to determine whether the parameters set during the trial operation satisfy the scheduled operating period. As a result, when the parameters of each operating condition set during the trial operation do not yield an estimated failure time exceeding the scheduled operating period, the operator selects an operating condition having optimal parameters from among the operating conditions displayed in Fig. 7 and starts the trial operation again.

Next, the operation of Embodiment 2 will be described with reference to Fig. 8. Fig. 8 is a flowchart illustrating an example of processing performed in the damage amount processing unit and the damage amount estimation unit according to Embodiment 2. In the processing flow shown in Fig. 8, compared with the processing flow in Embodiment 1 shown in Fig. 2, a processing flow including the damage amount estimation unit 12 after the RUJ signal is turned OFF is added. That is, the YES route of Step S21 corresponds to the processing flow of the damage amount processing unit 9, and the NO route corresponds to the processing flow of the damage amount estimation unit 12.

In Fig. 8, after the RUJ signal is turned OFF (NO route of Step S21), the damage amount estimation unit 12 acquires the scheduled operating period from the external device 5 or the operation unit 11 (Step S81). Then, based on the information and calculation results used by the damage amount processing unit 9, the damage amount estimation unit 12 calculates a damage amount estimation value de when the parameters are changed (Step S82), and further calculates the estimated failure time for each condition (Step S83). Finally, the damage amount estimation unit 12 outputs to the external device 5 or the display unit 10 the operating conditions that can operate for a period longer than the scheduled operating period, and ends the processing (Step S84).

In this manner, by newly adding the damage amount estimation unit 12 to the power conversion device 102, it becomes possible to display, on the liquid crystal panel of the external device 5 or on the display unit 10, the relationship between the damage amount and time under conditions in which the parameters related to the damage amount of the power semiconductor are changed in each trial operation, so that the operator can confirm such relationship.

As described above, according to Embodiment 2, since failure estimation, that is, lifetime estimation using multiple different operating conditions can be performed in a single trial operation, it is possible to efficiently derive optimal operating conditions with fewer trial operations compared with Embodiment 1 described above. As a result, lifetime diagnosis can be performed in a shorter period than in Embodiment 1, so that the damage to the power semiconductor is minimized, and the operator's operation frequency and workload for condition confirmation are reduced, improving usability.

In Embodiment 2, since the scheduled operating period is known, it is also possible to set the system so that any operating condition that reaches an estimated failure time before the scheduled operating period is automatically excluded from the list of selectable options by calculation in the damage amount estimation unit 12. This applies both when the parameter of the operating condition is automatically changed and when it is manually set by the operator. In such a case where options are automatically excluded, it is desirable that the interval between the scheduled operating period and the estimated failure time can be arbitrarily set in units of days, weeks, months, or years.

### <Embodiment 3>

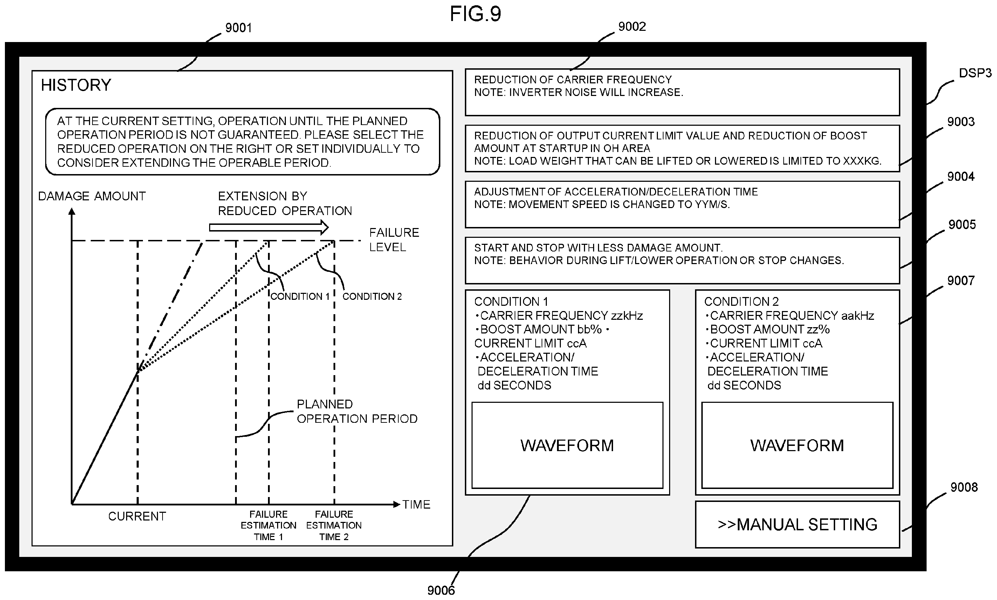

Next, Embodiment 3 of the present invention will be described with reference to Figs. 6 and 9 described in Embodiment 2 above. Fig. 9 is an explanatory diagram showing an example of a display of operation results according to Embodiment 3 of the present invention. In this Embodiment 3, since the configuration itself is the same as that of Embodiment 2 described above, the configuration of Fig. 6 will be used for explanation.

The power conversion device 103 according to Embodiment 3 has the same configuration as the power conversion device 102 shown in Embodiment 2 described above, but differs in the content displayed on the external device 5 or the display unit 10. The description of units having the same reference numerals as those in Fig. 1 is omitted.

In Embodiment 2 described above, a parameter setting method using the trial operation before equipment installation was described; however, the present invention is not limited thereto and the same parameter method can also be applied after the equipment has been installed.

In operation after equipment installation in which operating conditions have been determined, if the resulting operating pattern differs from the operating pattern assumed before equipment installation, a deviation may occur between the estimated damage amount results (estimated failure time) before and after equipment installation. If the operating pattern differs from the pre-assumed one, it is desirable to verify the validity of the parameters of the current operating conditions through inspection or the like before reaching the lifetime of the power semiconductor.

In this Embodiment 3, the method of updating parameters after equipment installation using the parameters set during the trial operation, taking into account the damage amount gradually accumulated through actual operation, differs from Embodiment 2 described above.

In Embodiment 2 described above, lifetime estimation was performed during the trial operation to derive operating conditions exceeding the scheduled operating period; however, in Embodiment 3 described below, during the actual operation stage after equipment installation, lifetime estimation is performed while the damage to the power semiconductor remains small, as in the trial operation, to derive operating conditions exceeding the scheduled operating period.

In Fig. 6, the power conversion device 103 has an overall configuration similar to that of the power conversion device 102 shown in Fig. 5, but differs in that information after equipment installation is added to the signals exchanged between the external device 5 and the input/output unit 6. In addition, since the power conversion device 103 of this Embodiment 3 performs operation control after equipment installation, the operations of the control unit 7, the damage amount processing unit 9, and the damage amount estimation unit 12 described in the above embodiments differ in that they operate after equipment installation.

The control unit 7 controls the operation of the power conversion device 103 during actual operation after equipment installation, and at the same time controls the activation of the inverter unit 4. The damage amount processing unit 9 differs from that of Embodiment 2 described above only in that it operates after equipment installation, and the damage amount estimation unit 12 differs from that of Embodiment 2 in that it generates operation results based on parameters changed during actual operation, based on outputs from the control unit 7 and the damage amount processing unit 9.

In Fig. 9, an example of a trial operation result is shown as a display screen DSP3. In Fig. 9, the timing at which parameter updating has been attempted after equipment installation is indicated as "current," and in the solid line showing the relationship between damage amount and time, the accumulation of the damage amount through actual operation from the start of equipment operation is represented.

In Fig. 9, the chain double-dashed line showing the relationship between damage amount and time represents the state in which the damage amount reaches the failure level under the parameters set during equipment operation, as calculated by the damage amount processing unit 9. In the history information 9001, the broken line showing the relationship between damage amount and time represents the state in which, under conditions in which major parameters related to the lifetime of the power semiconductor among the parameters set during equipment operation are changed, the damage amount reaches the failure level as estimated by the damage amount estimation unit 12.

The operator compares the operation scheduled period with the estimated failure time, determines whether the parameters set during equipment operation satisfy the operation scheduled period, and, if the parameters set during equipment operation do not satisfy the operation scheduled period, selects the optimal parameter from among the operation conditions displayed in Fig. 8 and operates the equipment again (by performing the manual setting 9008 tap operation by the operator).

As shown in Fig. 9, the power conversion device 103 calculates a plurality of operation conditions capable of operating for a period longer than the operation scheduled period based on a plurality of operation policies respectively, and also records the influence when the parameters set are updated. This is because, as the life of the power semiconductor is prolonged due to parameter updating, there is a possibility that the specifications on the load side of the power conversion device 103 may deteriorate.

Since the user of the power conversion device 103 needs to consider in advance the influence on the entire system caused by the change in specifications after the equipment has already started operation, it is preferable to display in advance and confirm what kind of influence will result from the parameter updating.

In Fig. 9, as an example, four operation policies 9002, 9003, 9004, and 9005 are shown, and operation condition 1 and operation condition 2 are displayed respectively as operation condition information 9006 and 9007. Here, the operation policy indicates a setting guideline for each parameter constituting the operation condition. The operation policies are set in the required number according to the types of parameters constituting the operation condition.

The operation policy 9002 is a screen setting that allows the reduction of the carrier frequency to be operated on the display screen DSP3. By tapping the operation policy 9002, the carrier frequency can be set to be reduced. The operation policy 9003 is a screen setting that allows the reduction of the 0 Hz region current limit value and the starting boost amount to be operated on the display screen DSP3. By tapping the operation policy 9003, it is possible to set the reduction of the 0 Hz region current limit value and the starting boost amount.

The operation policy 9004 is a screen setting that allows adjustment of the acceleration/deceleration time on the display screen DSP3. By tapping the operation policy 9004, it is possible to set the adjustment of the acceleration/deceleration time. The operation policy 9005 is a screen setting that allows operation of the start and stop of, for example, an elevator, on the phase having a smaller damage amount on the display screen DSP3. By tapping the operation policy 9005, it is possible to set the operation of the start and stop of the elevator.

Regarding the operation policy 9005, the power semiconductor mainly exhibits an increase in junction temperature ripple and an increase in damage amount in the region where the motor 2000 is rotating at a low speed. Therefore, by starting or stopping from the phase having a smaller damage amount, the phase through which a large current flows during low-speed rotation is not fixed, so that the accumulation of damage amounts among the respective phases is equalized, and the lifetime of the inverter unit 4 as a whole can be extended.

On the other hand, since the phase through which current flows during starting and stopping is not fixed, it is difficult to achieve compatibility with precise position control of the motor 2000, and there is a possibility that the behavior such as the speed or position at the time of starting and stopping may vary due to parameter change.

As described above, the power conversion device 103 according to this Embodiment 3 differs from the power conversion device 102 described in Embodiment 2 in that it provides a method for updating parameters during the operation period after equipment installation. That is, since the optimization of operation conditions is performed after equipment installation, it is possible to find operation conditions exceeding the operation scheduled period before the power semiconductor is significantly damaged by performing lifetime estimation in a short period during actual operation, as in the trial operations in Embodiments 1 and 2.

Thus, in this Embodiment 3, parameters satisfying the operation scheduled period are calculated based on a plurality of operation policies, and the estimated failure time upon parameter updating and the influence accompanying the parameter updating are displayed together, and since the parameters can be interactively and real-time variable through the operator's operation, it becomes possible not only to quickly find the ideal parameters but also to improve the operability for deriving appropriate operation conditions.

According to this Embodiment 3 as described above, even if the operation pattern after equipment installation differs from the operation pattern assumed before equipment installation, it is possible to suppress in a short period the deviation from the estimated result of the damage amount. In particular, in Embodiment 3 described above, since the power conversion device 103 has already been installed and is in actual operation, the lifetime diagnosis is repeatedly performed while finely changing the operation policy during actual operation, and therefore, even after equipment installation, it becomes possible to suppress the damage of the semiconductor and derive the optimal operation condition at an early stage.

Here, in Embodiments 1 to 3 described above, examples were shown in which Embodiments 1 and 2 are applied before equipment installation, and Embodiment 3 is applied after equipment installation; however, the present invention is not limited thereto, and any of Embodiments 1, 2, and 3 may be applied during trial operation or during actual operation after equipment installation. For example, when Embodiments 1 and 2 are applied after equipment installation, the use corresponds to a test operation (for example, a test mode) after equipment installation, and when Embodiment 3 is applied before equipment installation, the use corresponds directly to a trial operation.

In addition, in each of the embodiments described above, a part of the regions of the DSP1, 2, and 3 may be displayed on the external device 5 while the other regions are displayed on the display unit 10, or the entire display may always be shown on the external device 5 and a part thereof displayed on the display unit 10. Of course, it is also possible that the entire display is always shown on the display unit 10 and a part thereof displayed on the external device 5.

Furthermore, in Embodiment 1 described above, an example was shown in which the power conversion device 100 and the external device 5 are connected via a bus, but the present invention is not limited thereto, and the power conversion device 100 and the external device 5 may be connected via a network such as the Internet to enable remote operation. The same applies to the modified examples and other embodiments.

As in each of the embodiments and modified examples described above, the power conversion device, which is widely used as a motor drive device in industrial fields such as manufacturing equipment, elevating equipment, and conveying equipment, contributes to realizing long-term stable operation with reduced damage to the inverter (power semiconductor) in various applications from the viewpoint of performing lifetime diagnosis in setting operation conditions before and after equipment installation. In particular, it is suitable for applications of power conversion devices in which start/stop control is frequently performed due to power cycles.

Further, the present invention is not limited to the embodiments and modified examples described above, and various modifications are included. For example, the embodiments described above are explained in detail to facilitate understanding of the present invention, and are not necessarily limited to those having all of the described configurations. In addition, a part of the configuration of each embodiment may be added to, deleted from, or replaced with another configuration. Furthermore, each of the configurations and functions described above may be implemented by software in which a processor interprets and executes a program for realizing each function, or may be implemented by hardware, for example, by designing as an integrated circuit.

### REFERENCE SIGNS LIST

- 3: Smoothing capacitor
- 4: Inverter unit
- 5: External device
- 6: Input/output unit
- 7: Control unit
- 9: Damage amount processing unit
- 10: Display unit
- 11: Operation unit
- 12: Damage amount estimation unit
- 21: Power semiconductor
- 22: Power semiconductor
- 23: Power semiconductor
- 24: Power semiconductor
- 25: Power semiconductor
- 26: Power semiconductor
- 41: Power semiconductor
- 42: Power semiconductor
- 43: Power semiconductor
- 44: Power semiconductor
- 45: Power semiconductor
- 46: Power semiconductor
- 81: Voltage detection unit
- 82: Current detection unit
- 83: Current detection unit
- 100: Power conversion device
- 101: Power conversion device
- 102: Power conversion device
- 103: Power conversion device
- 200: Rectifier unit
- 201: Rectifier unit

## Claims

1. A power conversion device comprising:
an inverter unit that converts a DC voltage into an AC voltage;
a control unit that controls operation of the inverter unit based on predetermined operation conditions; and
a damage amount processing unit that calculates a damage amount of the inverter unit during the operation period of the inverter unit by the control unit and generates data indicating operation results based on the calculated damage amount and the operation conditions.

2. The power conversion device according to claim 1, wherein the power conversion device includes a voltage detection unit that detects a DC voltage and a current detection unit that detects an output current of the inverter unit, and the damage amount processing unit calculates the damage amount based on the detected DC voltage and output current during the operation period of the inverter unit.

3. The power conversion device according to claim 1, wherein a plurality of predetermined operation conditions respectively different from each other are set for a plurality of pre-set operations, the control unit controls the plurality of operations, and the damage amount processing unit obtains operation results including a damage estimation timing for each operation based on the accumulated damage amount for each operation.

4. The power conversion device according to claim 1, wherein the power conversion device includes a display unit, and the display unit displays at least part of the operation results based on the data generated by the damage amount processing unit.

5. The power conversion device according to claim 1, wherein the power conversion device is connected to a display device, and the damage amount processing unit outputs at least part of the operation results based on the generated data to the display device.

6. The power conversion device according to claim 1, wherein the power conversion device is connected to an external device that receives operation input from an operator, and the control unit inputs the predetermined operation conditions from the external device.

7. The power conversion device according to claim 1, wherein the inverter unit is a power regeneration converter.

8. The power conversion device according to claim 1, wherein a motor is connected to an output side of the inverter unit, and the predetermined operation conditions include a parameter that adjusts a current value in a low-speed region of a rotational frequency of the motor.

9. The power conversion device according to claim 1, wherein a trial operation signal for managing start and end of trial operation of the inverter unit is input to the control unit.

10. The power conversion device according to claim 1, wherein an operation scheduled period during which the inverter unit operates normally is preset, and the power conversion device further comprises a damage amount estimation unit that calculates an estimated failure timing when the operation conditions are changed based on the operation scheduled period, the operation conditions, and the damage amount measured by the damage amount processing unit, and estimates the operation results.

11. The power conversion device according to claim 10, wherein the power conversion device is connected to an external device that receives operation input from an operator, and during the operation period, which is after equipment installation, the control unit executes change of the operation conditions and continues control of operation of the inverter unit when receiving the change of the operation conditions from the external device during the operation period.

12. The power conversion device according to claim 11, wherein the damage amount estimation unit estimates the failure estimation timing based on the damage amount accumulated during the operation period and creates a plurality of operation conditions having parameter settings in which an unfailed period indicated by the estimated failure estimation timing becomes longer relative to the predetermined operation scheduled period.

13. A power conversion method of a power conversion device that converts a DC voltage into an AC voltage by an inverter unit, controls operation of the inverter unit based on predetermined operation conditions by a control unit, and calculates a damage amount of the inverter unit during operation of the inverter unit by the control unit by a damage amount processing unit,
wherein an operation scheduled period during which the inverter unit operates normally is preset, and in the damage amount processing unit, the damage amount of the inverter unit is measured during the operation period of the inverter unit by the control unit, an estimated failure timing of the inverter unit is calculated based on the measured damage amount and the operation conditions, and data indicating operation results is generated based on the calculated estimated failure timing, the operation scheduled period, and the operation conditions.

14. The power conversion method according to claim 13, wherein the power conversion device further comprises a damage amount estimation unit that estimates a damage amount, and in the damage amount estimation unit, the operation results are estimated by calculating an estimated failure timing when the operation conditions are changed based on the operation scheduled period, the operation conditions, and the damage amount measured by the damage amount processing unit.

15. The power conversion method according to claim 14, wherein the power conversion device is connected to an external device that receives operation input from an operator, and during the operation period, which is after equipment installation, the control unit executes change of the operation conditions and continues control of operation of the inverter unit when receiving the change of the operation conditions from the external device during the operation period.
